# EUROPÄISCHE PATENTANMELDUNG

(11) **EP 1 418 442 A1**
(43) Veröffentlichungstag der Anmeldung: **12.05.2004**
(21) Anmeldenummer: 03022342.4
(22) Anmeldetag: 04.10.2003
(51) Int. Cl.: G01S 13/93

(54) **Radarsystem zur Umfeldüberwachung eines Fahrzeuges und Verfahren hierfür**

(30) Priorität: 11.11.2002 DE 10252229
(71) Anmelder: Valeo Schalter und Sensoren GmbH, 74321 Bietigheim-Bissingen (DE)
(72) Erfinder: Walz, Dirk, 72654 Neckartenzlingen (DE); Gotzig, Heinrich, Dr., 74081 Heilbronn (DE); Künzler, Frank, 76703 Kraichtal (DE); Papziner, Uwe, 71739 Oberriexingen (DE)
(74) Vertreter: Dreiss, Fuhlendorf, Steimle & Becker

(57) **Zusammenfassung**

Die Erfindung betrifft ein Radarsystem, ein Karosserieteil mit einem Radarsystem und ein Verfahren zum Betreiben eines Radarsystems, gekennzeichnet durch eine Zentraleinheit zur Erzeugung und Auswertung der Hochfrequenzsignale und durch mehrere, mit der Zentraleinheit verbundene Sensoreinheiten zum Senden und/oder Empfangen der Hochfrequenzsignale.

## Beschreibung

Die Erfindung betrifft ein Radarsystem, insbesondere zur Umfeldüberwachung eines Fahrzeuges. Derartige Radarsysteme finden beispielsweise bei Stop-and-Go-Anwendungen oder bei Parkhilfesystemen Verwendung. Bekannte Radarsysteme sind zur Umfeldüberwachung aus mehreren einzelnen Sensoren aufgebaut, wobei jeder dieser Sensoren eine Hochfrequenzbaugruppe und eine Niederfrequenzbaugruppe beinhaltet. Die Hochfrequenzbaugruppe erzeugt, sendet aus und empfängt Hochfrequenzsignale im Bereich von beispielsweise circa 10 bis 80 Gigahertz. Die empfangenen Hochfrequenzsignale werden auf Niederfrequenz (Kilo- bis Megahertzbereich) heruntergemischt und von der Niederfrequenzbaugruppe ausgewertet. Bekannte Radarsysteme weisen mehrere derartiger Sensoren auf, und sind daher in Herstellung und Anschaffung sehr teuer. Die Erfindung betrifft außerdem ein Karosserieteil mit einem Radarsystem und ein Verfahren zum Betreiben eines Radarsystems.

Der vorliegenden Erfindung liegt die Aufgabe zugrunde, ein Radarsystem, ein Karosserieteil mit einem Radarsystem und ein Verfahren zum Betreiben eines Radarsystems bereitzustellen, das mit weniger kostenintensiven Bauteilen auskommt. Zudem soll eine verbesserte Signalauswertung ermöglicht werden.

Diese Aufgabe wird durch ein Radarsystem gelöst, das gekennzeichnet ist durch eine Zentraleinheit zur Erzeugung und Auswertung der Hochfrequenzsignale und durch mehrere mit der Zentraleinheit verbundene Sensoreinheiten zum Senden und/oder Empfangen der Hochfrequenzsignale. Ein derartiges Radarsystem hat den Vorteil, dass lediglich ein kostenintensives Bauteil, nämlich die Zentraleinheit, zur Erzeugung und Auswertung der Hochfrequenzsignale, vorzusehen ist. Die Sensoreinheiten zum Senden und/oder Empfangen der Hochfrequenzsignale erzeugen selber keine Hochfrequenzsignale; die in der Zentraleinheit erzeugten Hochfrequenzsignale werden an die Sensoreinheiten geleitet und ausgesendet und von den Sensoreinheiten, die die Hochfrequenzsignale empfangen, zur Auswertung an die Zentraleinheit geleitet. Im Vergleich zu bekannten Radarsystemen, bei denen jeder Sensor Bauteile zur Erzeugung und Auswertung der Hochfrequenzsignale aufweist, ist bei der Erfindung für mehrere Sensoreinheiten, die die Hochfrequenzsignale senden und/oder empfangen, eine Zentraleinheit zur gemeinsamen Erzeugung und Auswertung der Hochfrequenzsignale vorgesehen.

Vorteilhafterweise sind Sensoreinheiten in Form von Sendeeinheiten, die Hochfrequenzsignale aussenden, und andere Sensoreinheiten in Form von Empfangseinheiten, die Hochfrequenzsignale empfangen, vorgesehen. Die Sendeeinheiten erzeugen selbst, wie bereits erwähnt, keine Hochfrequenzsignale; sie senden die in der Zentraleinheit erzeugten Hochfrequenzsignale lediglich aus. Die Empfangseinheiten empfangen die Hochfrequenzsignale, ohne diese abschließend auszuwerten, und senden die empfangenen Hochfrequenzsignale zur Auswertung an die Zentraleinheit weiter.

Die Sensoreinheiten umfassen dabei vorteilhafterweise Sendeantennen und/oder Empfangsantennen. Denkbar ist, dass die Sensoreinheiten lediglich Sendeantennen beziehungsweise Empfangsantennen aufweisen.

Erfindungsgemäß ist weiter denkbar, dass die Sensoreinheiten, und insbesondere die Empfängereinheiten, einen Vorverstärker zur Vorverstärkung der empfangenen Signale aufweisen. Hierdurch wird erreicht, dass bei der Übermittlung der empfangenen Signale von der entsprechenden Sensoreinheit zur Zentraleinheit kein Signalverlust auftritt. Entsprechende Vorverstärker bauen sehr kompakt und sind kostengünstig beziehbar.

Erfindungsgemäß ist ferner denkbar, dass die Sensoreinheiten eine lediglich rudimentäre Signalaufbereitung und/oder Signalauswertung umfassen. Hierdurch wird die Zentraleinheit in gewissem Umfang entlastet; außerdem wird ein Signalverlust bei der Übertragung der Signale zwischen Zentraleinheit und den entsprechenden Sensoreinheiten verringert.

Die Zentraleinheit umfasst vorteilhafterweise eine Hochfrequenzbaugruppe und eine Niederfrequenzbaugruppe. Die Hochfrequenzbaugruppe erzeugt Hochfrequenzsignale und bereitet die empfangenen Hochfrequenzsignale auf. Die empfangenen Hochfrequenzsignale werden in den Niederfrequenzbereich runtergemischt und von der Niederfrequenzbaugruppe ausgewertet. Die einzelnen Sensoreinheiten weisen insbesondere keine Niederfrequenzbaugruppe auf.

Um einen entsprechenden Datenaustausch zwischen den Sensoreinheiten und der Zentraleinheit zu gewährleisten, kann erfindungsgemäß vorgesehen sein, dass die Sensoreinheiten mittels Hochfrequenzkabel, Hochfrequenz-Kunststoffspritzguss-Wellenleiter, Koaxialkabel oder dergleichen mit der Zentraleinheit verbunden sind.

Kostengünstige, zuverlässige und langlebige Sensoreinheiten können als teilmetallisierte Kunststoffteile ausgebildet sein. Diese teilmetallisierten Kunststoffteile weisen vorzugsweise einen Anschluss für ein Hochfrequenzkabel beziehungsweise für einen Hochfrequenzwellenleiter auf. Denkbar ist auch, einen Kunststoff zu verwenden, der eine intrinsische Leitfähigkeit aufweist. Ferner kann in den Sensoreinheiten ein entsprechend integriertes Vorverstärkermodul enthalten sein.

Die eingangs genannte Aufgabe wird außerdem gelöst durch ein Karosserieteil eines Fahrzeuges, insbesondere durch einen Stoßfänger eines Kraftfahrzeuges, das ein erfindungsgemäßes Radarsystem aufweist oder das zur Anordnung eines erfindungsgemäßen Radarsystems vorgesehen ist.

Vorteilhafterweise weist das Radarsystem wenigstens zwei, und insbesondere vier, Sensoreinheiten auf, die insgesamt einen Detektionswinkel von beispielsweise 180° abdecken können. Das Karosserieteil kann hierbei insbesondere als Eckstoßfänger ausgebildet sein. Mit lediglich einer Zentraleinheit und einer entsprechenden Anzahl von Sensoreinheiten kann folglich ein entsprechend großes Umfeld erfasst werden.

Außerdem wird die genannte Aufgabe durch ein Verfahren zum Betreiben eines Radarsystems gelöst, wobei das Radarsystem eine Zentraleinheit und mehrere, mit der Zentraleinheit verbundene, Sensoreinheiten, aufweist. Die Sensoreinheiten senden aus und/oder empfangen hierbei Hochfrequenzsignale, wobei die Erzeugung der auszusendenden und die Auswertung der empfangenen Hochfrequenzsignale in der Zentraleinheit erfolgt. Dabei ist denkbar, dass die empfangenen Signale zur besseren Weiterleitung der Signale zur Zentraleinheit in den entsprechend Sensoreinheiten vorverstärkt werden.

Eine verbesserte Signalauswertung ergibt sich dann, wenn die von einer Sensoreinheit ausgesendeten Hochfrequenzsignale von wenigstens zwei Sensoreinheiten empfangen werden und wenn die empfangenen Hochfrequenzsignale dieser wenigstens beiden Sensoreinheiten bei der Auswertung der empfangenen Hochfrequenzsignale berücksichtigt werden. Durch die Verbindung der Sensoreinheiten mit der Zentraleinheit (zum Beispiel über entsprechende Hochfrequenzkabel) entsteht eine phasenstarre Korrelation der Signale der einzelnen Sensoreinheiten. Daraus ergibt sich die Möglichkeit der Aufnahme der von einer Sensoreinheit ausgesendeten Signale durch eine andere Sensoreinheit desselben Radarsystems in der Weise, dass eine verbesserte Signalauswertung möglich wird. Es kann durch den Vergleich der Laufzeit der Signale einer Sensoreinheit, die von einem Objekt in eine zweite Sensoreinheit hinein reflektiert werden, mit der Laufzeit der Signale der Sensoreinheiten, die vom Objekt in die jeweiligen Sensoreinheiten zurück reflektiert werden, ohne Erhöhung der Kosten eine Redundanz, eine verbesserte Entfernungsmessung und eine erhöhte Sicherheit der Interpretation der Signale erreicht werden.

Weitere vorteilhafte Einzelheiten und Ausgestaltungen der Erfindung sind der nachfolgenden Beschreibung zu entnehmen, in der die Erfindung anhand der in der Zeichnung dargestellten Ausführungsbeispiele näher beschrieben und erläutert ist.

Es zeigen:
- Figur 1: ein Kraftfahrzeug in Vogelperspektive;
- Figur 2: einen Ausschnitt des Stoßfängers des Fahrzeuges gemäß Figur 1;
- Figur 3: eine erste Ausführungsform einer Sensoreinheit eines erfindungsgemäßen Radarsystems; und
- Figur 4: eine zweite Ausführungsform einer Sensoreinheit eines erfindungsgemäßen Radarsystems.

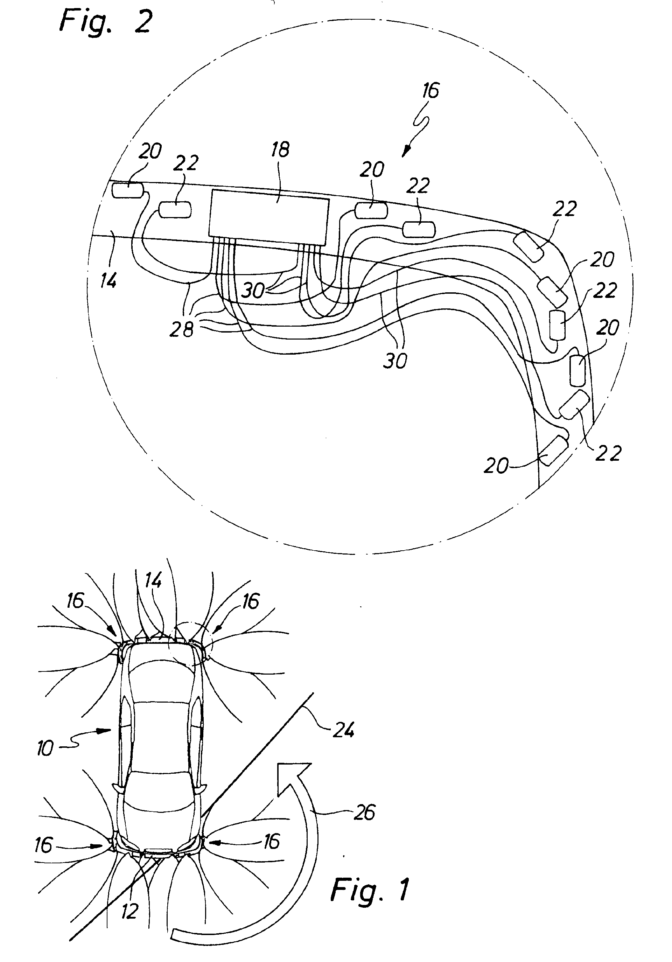

Das in der Figur 1 dargestellte Kraftfahrzeug 10 weist einen vorderen Stoßfänger 12 und einen hinteren Stoßfänger 14 auf. Im vorderen Stoßfänger 12 und im hinteren Stoßfänger 14 sind jeweils zwei erfindungsgemäße Radarsysteme 16 angeordnet. In der Figur 2 ist ein derartiges Radarsystem 16 schematisch vergrößert dargestellt. Jedes der Radarsysteme 16 weist eine Zentraleinheit 18 und in dem dargestellten Ausführungsbeispiel insgesamt zehn Sensoreinheiten, nämlich fünf Sendeeinheiten 20 und fünf Empfangseinheiten 22 auf. Die Zentraleinheit 18, die Sendeeinheiten 20 und die Empfangseinheiten 22 sind jeweils im Eckbereich des jeweiligen Stoßfängers 12, 14 angeordnet. Jedes Radarsystem 16 der dargestellten Ausführung deckt, wie es in der Figur 1 durch die Linie 24 und den Pfeil 26 angedeutet ist, einen Detektionswinkel von cirka 180° ab. Mit insgesamt vier erfindungsgemäßen Radarsystemen kann folglich das gesamte Umfeld des Fahrzeuges 10 erfasst werden.

Die Zentraleinheit 18 erzeugt Hochfrequenzsignale, die über Hochfrequenzkabel oder Wellenleiter 28 an die Sendeeinheiten 20 übertragen werden. Die Sendeeinheiten 20 senden die von der Zentraleinheit 18 erzeugten Hochfrequenzsignale aus. Die ausgesendeten Hochfrequenzsignale werden an im Fahrzeugumfeld vorhandenen Gegenständen reflektiert und von den Empfangseinheiten 22 empfangen. Über Wellenleiter 30 werden die empfangenen Signale der Zentraleinheit 18 zugeführt. Erfindungsgemäß ist denkbar, dass die Empfangseinheiten 22 Vorverstärker aufweisen, die die empfangenen Signale zur Weiterleitung an die Zentraleinheit 18 vorverstärken.

Die Zentraleinheit 18 umfass eine Hochfrequenzbaugruppe, zur Erzeugung und zur Signalaufbereitung der Hochfrequenzsignale. Außerdem weist die Zentraleinheit 18 eine Niederfrequenzbaugruppe auf, die die auf Niederfrequenz heruntergemischten Hochfrequenzsignale auswertet.

Die von den Sendeeinheiten 20 ausgesendeten und an entsprechenden Gegenständen reflektierten Hochfrequenzsignale werden von einer oder mehreren Empfangseinheiten 22 empfangen. Aufgrund der phasenstarren Korrelation der Signale der einzelnen Sendeeinheiten 20 und Empfangseinheiten 22 kann eine verbesserte Entfernungsmessung und damit eine erhöhte Sicherheit in der Interpretation der Signale erreicht werden.

Das in der Figur 2 dargestellte Radarsystem 16 weist Sendeinheiten 20 auf, die unterschiedlich von Empfangseinheiten 22 ausgebildet sind. Erfindungsgemäß ist allerdings denkbar, dass die Sendeeinheiten und Empfangseinheiten innerhalb eines einzigen Sensorelements untergebacht sind.

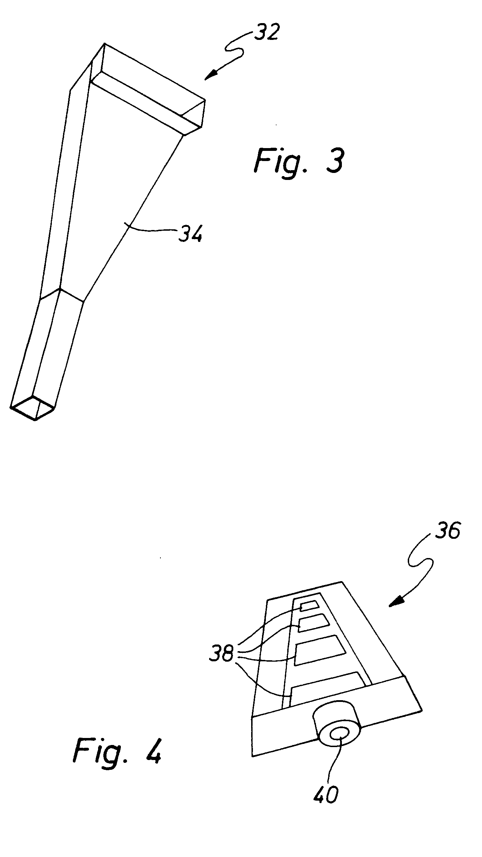

In der Figur 3 ist eine mögliche Ausführungsform einer Sensoreinheit 32, die als Sendeeinheit und/oder Empfangseinheit Verwendung finden kann, gezeigt. Die Sensoreinheit 32 weist eine Hornantenne 34 in gewinkelter Ausführung auf. Die Hornantenne 34 kann als Plastikspritzgussteil mit oder ohne Metallisierung ausgebildet sein.

In der Figur 4 ist eine Sensoreinheit 36 dargestellt, die ebenfalls als Sendeeinheit und/oder Empfangseinheit Verwendung finden kann. Die Sensoreinheit 36 umfasst eine Patchantenne 38, die in einem Plastikgehäuse mit oder ohne integriertem Vorverstärker, mit oder ohne Wellenleiteranschluss 40 vorgesehen sein kann.

Das in den Figuren beschriebene Radarsystem 16 weist den Vorteil auf, dass es gegenüber bekannten Radarsystemen einen sehr einfachen und preisgünstigen Aufbau aufweist. Im Gegensatz zu bekannten Radarsystemen ist lediglich ein Hochfrequenzbauteil und ein Niederfrequenzbauteil in einer Zentraleinheit 18 vorzusehen, die über Wellenleiter 28, 30 mit den jeweiligen Sensoreinheiten 20, 22, 32, 36 verbunden ist.

## Patentansprüche

1. Radarsystem (16), insbesondere zur Umfeldüberwachung eines Fahrzeuges (10), **gekennzeichnet, durch** eine Zentraleinheit (18) zur Erzeugung und Auswertung der Hochfrequenzsignale und **durch** mehrere mit der Zentraleinheit (18) verbundene Sensoreinheiten (20, 22, 32, 36) zum Senden und/oder Empfangen der Hochfrequenzsignale.

2. Radarsystem (16) nach Anspruch 1, **dadurch gekennzeichnet, dass** als Sensoreinheiten zum einen Sendeeinheiten (20) zum Aussenden der Hochfrequenzsignale und zum anderen Empfangseinheiten (22) zum Empfangen der Hochfrequenzsignale vorgesehen sind.

3. Radarsystem (16) nach Anspruch 1 oder 2, **dadurch gekennzeichnet, dass** die Sensoreinheiten (20, 22, 32, 36) eine Sendeantenne (34, 38) und/oder eine Empfangsantenne (34, 38) umfassen.

4. Radarsystem (16) nach Anspruch 1, 2 oder 3, **dadurch gekennzeichnet, dass** die Sensoreinheiten (20, 22), und insbesondere die Empfangseinheiten (22), einen Vorverstärker zur Vorverstärkung der empfangenen Signale aufweisen.

5. Radarsystem (16) nach einem der vorhergehenden Ansprüche, **dadurch gekennzeichnet, dass** die Sensoreinheiten (20, 22, 32, 36) eine rudimentäre Signalaufbereitung und/oder Signalauswertung umfassen.

6. Radarsystem (16) nach einem der vorhergehenden Ansprüche, **dadurch gekennzeichnet, dass** die Zentraleinheit (18) eine Hochfrequenzbaugruppe und eine Niederfrequenzbaugruppe aufweist.

7. Radarsystem (16) nach einem der vorhergehenden Ansprüche, **dadurch gekennzeichnet, dass** die Sensoreinheiten (20, 22, 32, 36) mittels Hochfrequenzkabel (28, 30), Hochfrequenz-Wellenleiter, Koaxialkabel oder dergleichen mit der Zentraleinheit verbunden sind.

8. Radarsystem (16) nach einem der vorhergehenden Ansprüche, **dadurch gekennzeichnet, dass** die Sensoreinheiten (20, 22, 32, 36) als teilmetallisierte Kunststoffteile und/oder als elektrisch leitfähiges Kunststoffteil ausgebildet sind.

9. Karosserieteil (12, 14) eines Fahrzeuges (10), insbesondere Stoßfänger eines Kraftfahrzeuges, mit einem Radarsystem (16) oder zur Anordnung eines Radarsystems (16) nach einem der vorhergehenden Ansprüche.

10. Karosserieteil (12, 14) nach Anspruch 9, **dadurch gekennzeichnet, dass** das Radarsystem (16) wenigstens zwei und vorzugsweise vier Sensoreinheiten (20, 22, 32, 36) aufweist, die insgesamt einen Detektionswinkel (26) von insbesondere wenigstens 180° abdecken.

11. Verfahren zum Betreiben eines Radarsystems (16), das umfasst eine Zentraleinheit (18) und mehrere mit der Zentraleinheit (18) verbundenen Sensoreinheiten (20, 22, 22, 36), wobei die Sensoreinheiten (20, 22, 32, 36) die Hochfrequenzsignale aussenden und/oder empfangen und die Erzeugung der auszusendenden und die Auswertung der empfangenen Hochfrequenzsignale in der Zentraleinheit (18) erfolgt.

12. Verfahren nach Anspruch 11, **dadurch gekennzeichnet, dass** die empfangenen Signale in den Sensoreinheiten (22, 32, 36) vorverstärkt werden.

13. Verfahren nach Anspruch 11 oder 12, **dadurch gekennzeichnet, dass** die von einer Sensoreinheit (20, 32, 36) ausgesendeten Hochfrequenzsignale von wenigstens zwei Sensoreinheiten (22, 32, 30) empfangen werden und dass die von den wenigstens beiden Sensoreinheiten (22, 32, 30) empfangenen Hochfrequenzsignale bei der Auswertung der Hochfrequenzsignale berücksichtigt werden.
